Europäisches Patentamt

(19) **European Patent Office**

**Office européen des brevets**

(11) Publication number: **0 069 359**

**A1**

(12) # EUROPEAN PATENT APPLICATION

(21) Application number: **82105903.7**

(22) Date of filing: **02.07.82**

(51) Int. Cl.³: **B 23 Q 3/08**

(30) Priority: **06.07.81 IL 63242**

(43) Date of publication of application:
**12.01.83 Bulletin 83/2**

(84) Designated Contracting States:
**AT BE CH DE FR GB IT LI LU NL SE**

(71) Applicant: **Ganani, Nitzan**
**4 Rosen Street**
**Ramath Chen Tel Aviv(IL)**

(71) Applicant: **Ganani, Nahum**
**4 Rosen Street**
**Ramath Chen Tel Aviv(IL)**

(72) Inventor: **Ganani, Nitzan**
**4 Rosen Street**
**Ramath Chen Tel Aviv(IL)**

(72) Inventor: **Ganani, Nahum**
**4 Rosen Street**
**Ramath Chen Tel Aviv(IL)**

(74) Representative: **Modiano, Guido et al,**
**MODIANO & ASSOCIATI S.A.S. Via Meravigli, 16**
**I-20123 Milan(IT)**

(54) **Chucking fixture.**

(57) A self-centering chucking fixture for use in connection with milling machines comprises a body (1) and seated in the said body (1) a pair of jaws (2-4) at least one of which is movable, those faces of said jaw bodies (2) which are directed towards one another extending in oppositely inclined planes, a wedge shaped body (9) being provided movably attached at its inclined faces to the inclined faces of the said jaws (2-4), means (5, 6) being provided for moving the said wedge shaped body (9) in a direction normal to the axis of the jaws which is common to both of them.

The chucking fixture is operated by pressurized fluids, i.e. air or oil.

FIG.2

EP 0 069 359 A1

The present invention relates to a self-centering chucking fixture for use in connection with milling machines. Such a chucking fixture is conventionally placed on and affixed to the table of the milling machine.

The use of numerically controlled computers to operate milling machines became inevitable so that most milling machines today are numerically controlled.

The main reason which caused this turnabout in the field of milling was the need to render smaller the size of the chucking fixtures which were needed in production processes in many milling operations and performance of several operations with the same grip of the part to be milled. Hence the result is a constant cycle of time for performance of operations which is not dependent on the machine operator, and further the reduction of waste due to human errors.

In order to perform a great number of milling operations at the same workpiece without changing its position and the fixture, the milling tools must be changed for each operation. So machines with automatic tool changers have been developed. These machines are controlled by means of a computer.

This development in the field of milling machines and their high cost due to their complex build brought changes in the technology of production and resulted in employing preforging or casting of parts, or use of partly shaped pieces which could be worked upon in less costly machines. In that case the gripholding of such semi-finished parts became complex due to their sometimes complicated geometric shape and special fixtures had to be developed for each part, and possibly for each operation.

- 3 -

0069359

Moreover, the new machines which are built to use a great number of milling tools, create, as mentioned above, a constant cycle of time which is based on productive time, i.e. the time during which the milling is actually done and additional time, i.e. unproductive time during which milling tools are being changed and the time during which the machine finishes one part and turns to another. The more milling tools must be changed, the greater the additional unproductive time relative to the productive time.

On an average usually 50% of the cycle is additional time and 50% of the time is productive.

The present invention solves these problems, i.e. a universal chucking fixture is provided which can be used for any shape or part which must be milled without previous preparation thereof. It is a further object of the invention to increase the efficiency of the machine by increasing the productive time due to the use of more than one chucking fixture on the same machine, so that a greater number of parts can be milled and each tool for every operation on a workpiece can be changed for the whole number of workpieces being treated at a time.

Due to the above mentioned reduced time consumption and the increase of cycle of time for several parts being milled simultaneously, the machine operator is able to serve simultaneously another machine to perform other odd jobs.

The known chucking fixtures are being prepared individually for each part. Their shape and their way of operation usually does not allow use of more than two fixtures on the same machine. The new chucking fixture answers these problems and others by providing the following features:

1. Pneumatic, hydraulic or electric operation (in contradistinction to the conventional mechanical vises).

2. Grip-holding under self centering location.

3. Possibility of exerting holding grip on outside or inside of workpiece.

4. Providing one permanently stationary and one movable jaw.

5. Possibility of shaping jaws according to need.

6. Possibility of arranging a number of chucking fixtures side by side and flush relative to one another and full use of whole area of table.

7. Common and simultaneous feed of actuating medium (in case of pneumatically or hydraulically actuated chucking fixtures).

8. Arrangement of separate and distinct controls for each chucking fixture by the machine operator, or a computer.

9. Increased safety of operator and set-up of tools, since the chucking fixture is normally in gripping position.

10. Possibility of positioning chucking fixtures horizontally or vertically.

11. Sealed construction (relative to cooling liquids and chips of milled metal).

According to the invention the new chucking fixture comprises a body and seated in the said body a pair of jaws at least one of which is movable, those faces of the said jaw bodies which are directed towards one another extending in oppositely

- 5 -

0069359

inclined planes, a wedge shaped body being provided movably attached at its inclined faces to the inclined faces of the said jaws, means being provided for moving the said wedge shaped body in a direction normal to the axis of the jaws which is common to both of them. This and further features of the invention will become clear from the following detailed description.

The invention will now be described with reference to the annexed drawings:

Fig. 1 is a plan view of the new chucking device.

Fig. 2 is a section along line II-II of Fig. 1.

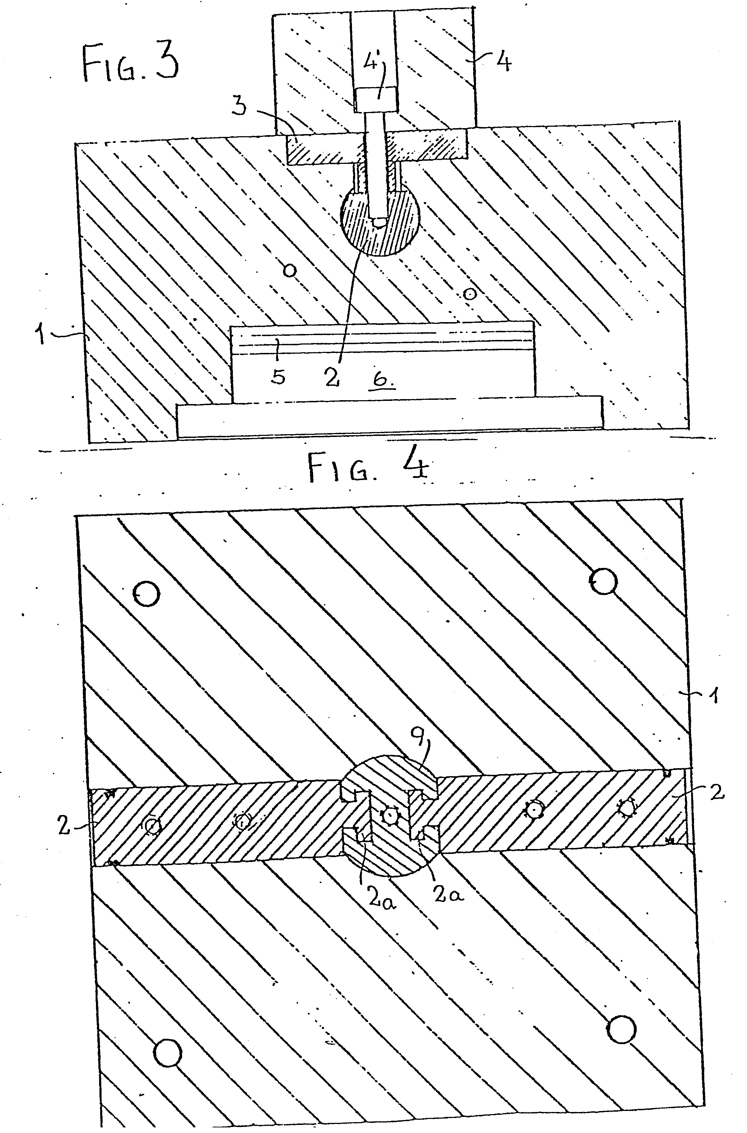

Fig. 3 is a section along line III-III of Fig. 1.

Fig. 4 is a section along line IV-IV of Fig. 2.

Fig. 5 is a side view of the chucking device while

Fig. 6 is a section along line VI-VI of Fig. 5.

Fig. 7 is a section along line VII-VII of Fig. 5.

Figs. 8, 9, 10 and 11 show an operational valve in open and closed positions.

Fig. 12 is a plan view of four chucking fixtures connected to one another and holding the parts to be milled.

Body 1 of the chucking fixture is square and has no outjutting portions at the edges which enables the connection to the milling table at each of its sides. Inside body 1, two members 2 move one towards the other, oppositely directed sides of these parts facing each other incline. To each one of these parts is connected a member 3 by two bolts 3'. On top

of each member 3 is connected a soft jaw 4 (e. g. by two bolts 4'). As mentioned above, the two members 2 are movable relative to one another, hence anything connected to them moves as well. The movement of part 2 is performed as follows:

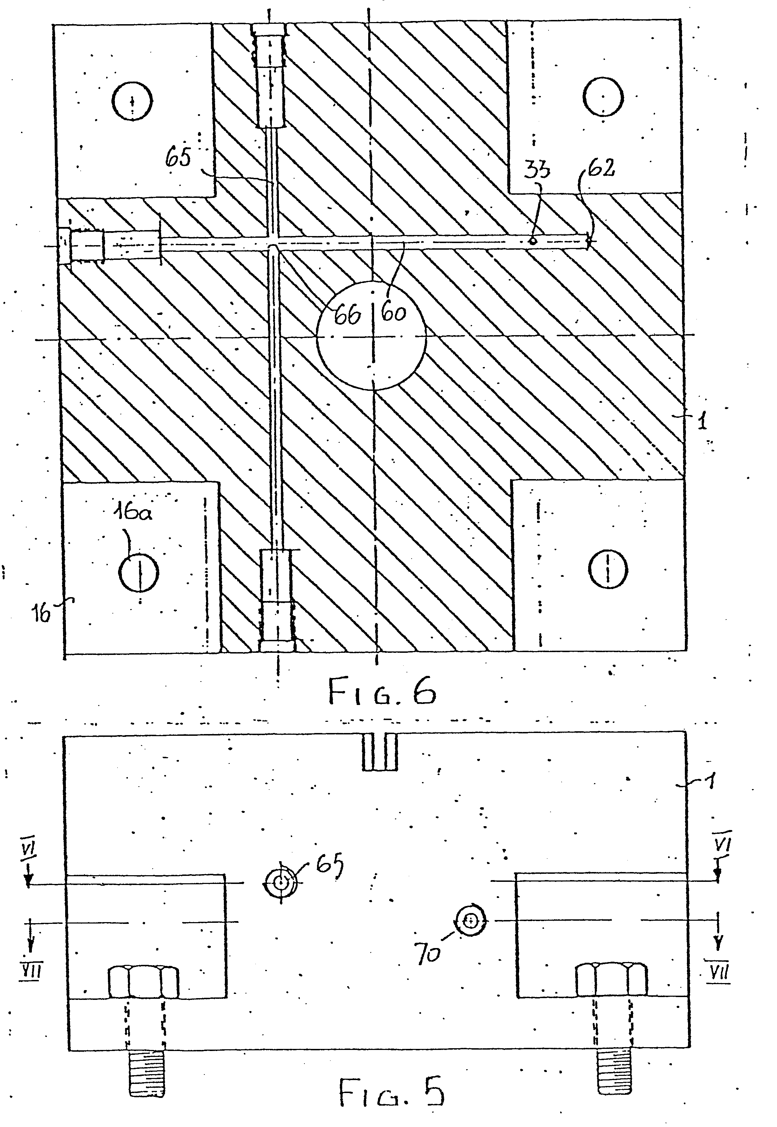

A wedge shaped part 9 contacts and is connected with the inclined sides of members 2, so that the vertical movements of wedge 9 influences parts 2. A downward movement of wedge 9 increases the distance between the two parts 2; an upward movement pulls them towards one another. The connection between these parts is shown in Fig. 4, in a T-shaped groove in the lateral sides of wedge 9 are engaged correspondingly shaped ribs 2a of members 2. Wedge 9 is connected with a piston 5 which moves in a cylinder 6. The movement of piston 5 is brought about by compressed air or oil, which is fed into the cylinder in a manner to be described.

The movement of members (jaws) 2 occurs simultaneously in one or the other direction. The obliquity at the sides of wedge 9 is about $8^\circ$ which angle permits a grip onto the workpiece equal to a pressure up to 4 tons. Equally, self-locking is attained, so that even in a failure, e. g. loss of air pressure or feed of oil, the grip is maintained.

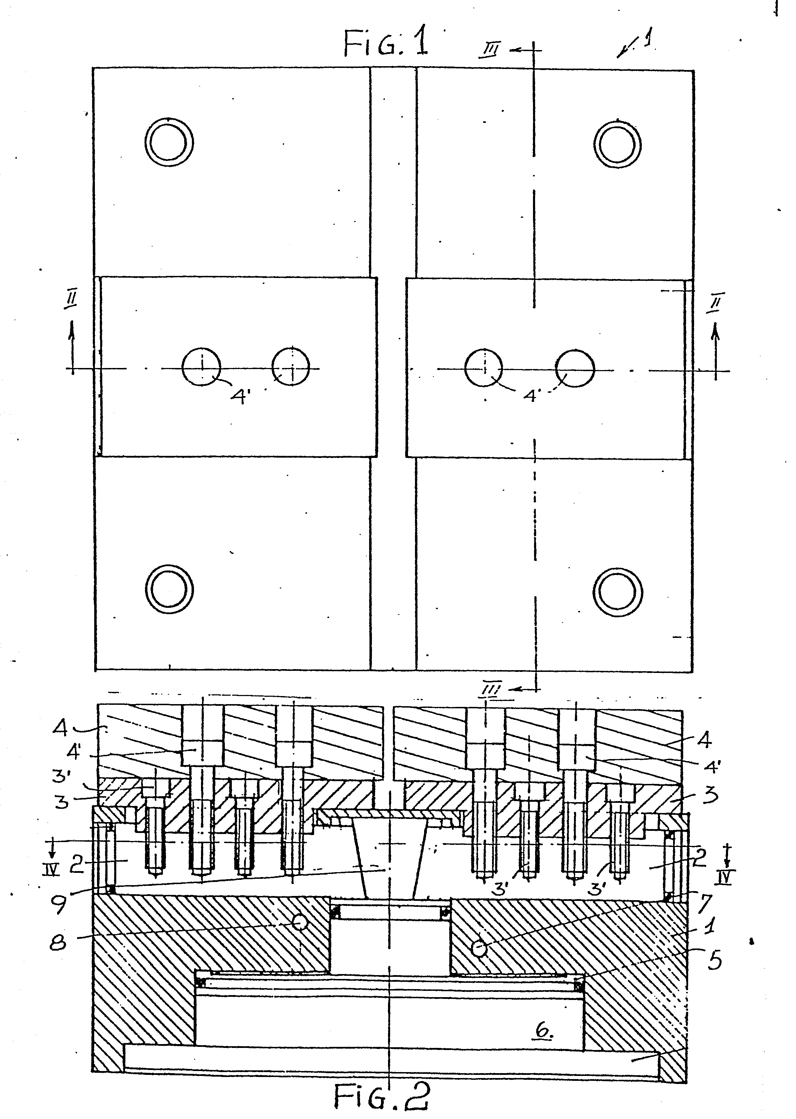

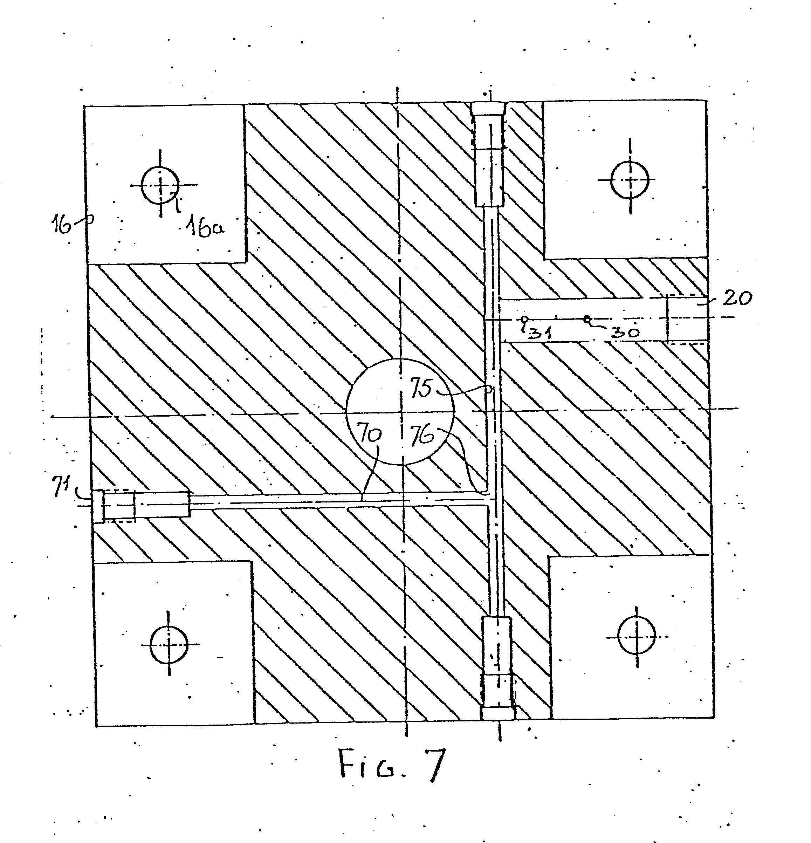

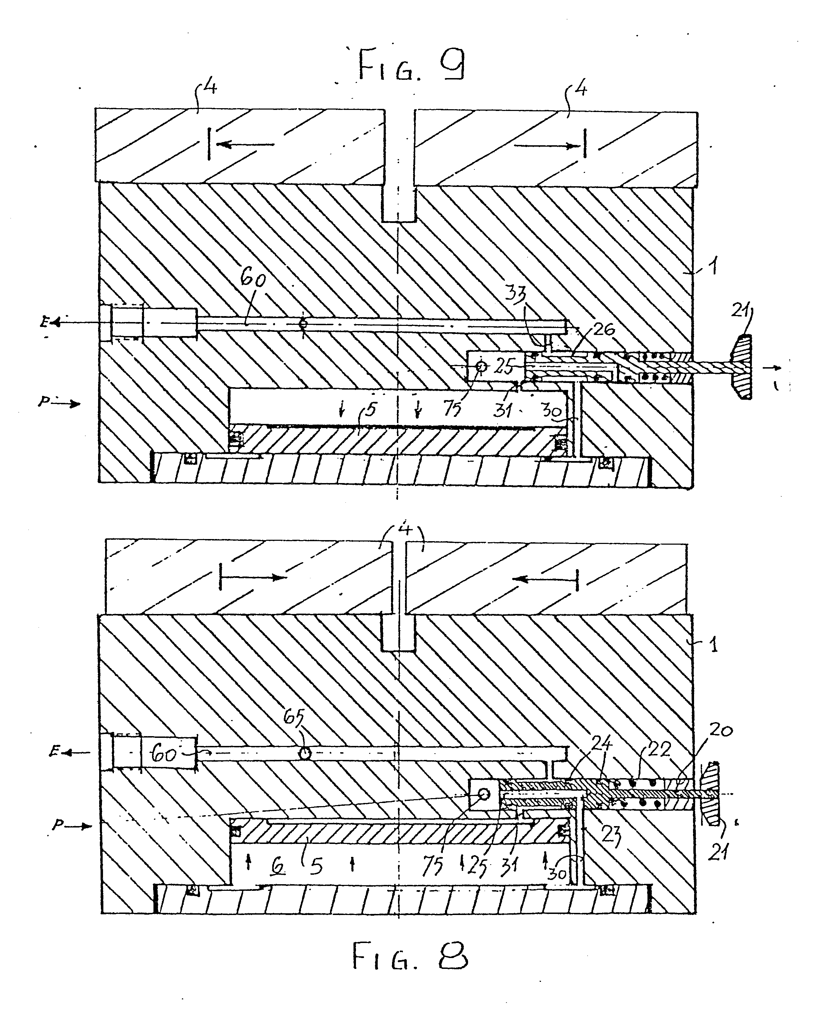

Supply of pressure medium to the cylinder occurs via two sets of conduits being bores in body 1. Each set extends in a different place, as can be seen in Figs. 2 and 5. The section of Fig. 6 shows one set 8, while Fig. 7 shows the second set 7. The upper set in Fig. 6 is composed of bore 60 and 65. Bore 60 has an inlet 61 and it terminates at 62. This bore is connected to an operation valve by cross passage 33. Bore 65 passes through the whole width of body 1 and crossingly connects with bore 60 at 66. Each of the inlets to these bores is provided with a seal which permits its hermetic closure or insertion of a tubular conduit leading to a vicinal, identical chucking fixture (as will be described).

The lower set of conduits in Fig. 7 consists of a bore 70, inlets 71 connecting with bore 70 and 75. Bore 75 - similar to bore 65 - passes through the whole width of body 1. Bore 75 connects with an operation valve moving in a cylinder 20 (will be described presently). Bores 70 and 75 connect at 76.

Turning now to Figs. 8, 9, 10 and 11, the valve is composed of a handle 21, a return spring 22, piston 23 and O-rings 24. Pressurized air is forced into the lower set via bore 75 (or 70). The air is passed through bore 75 into the system, i. e. to cylinder 20.

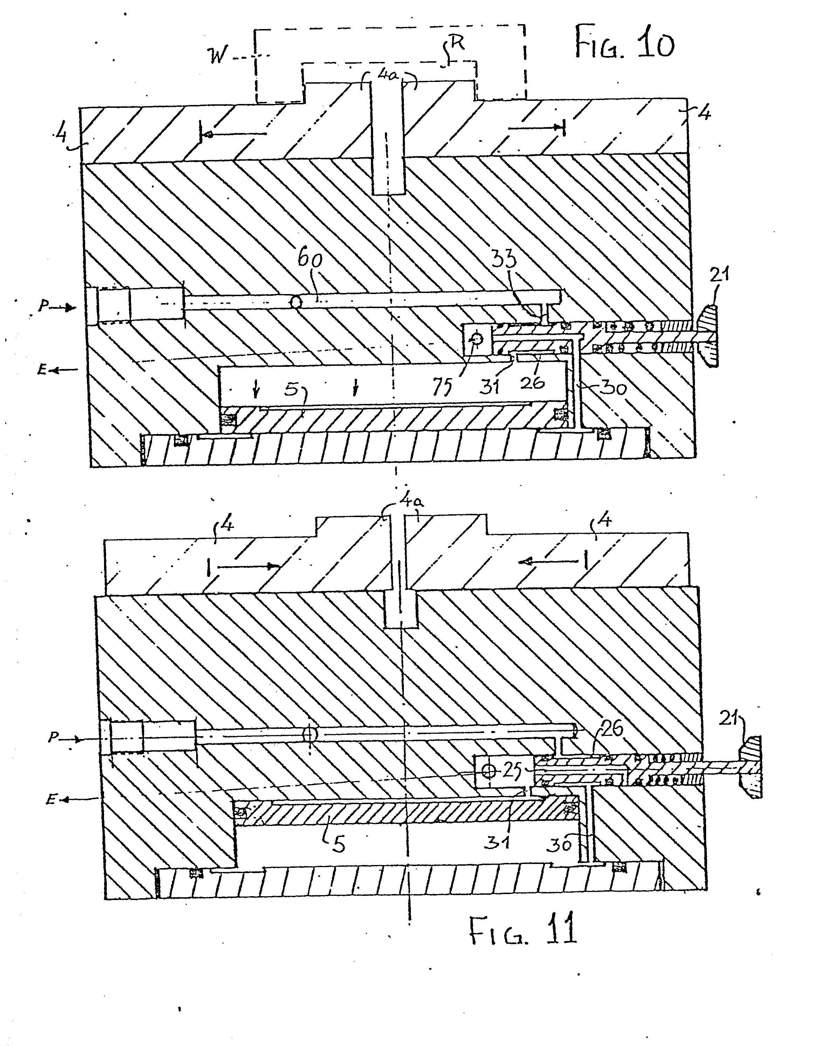

In the piston 23 there is provided a bore 25 from which pressurized air can flow into a conduit 30 which communicates with the interior of cylinder 6 at the lower part of the latter. The air exerts pressure on the underside of piston 5 and raises the latter. This upward motion of piston 5 causes wedge 9 to move upwardly, and consequently pulling jaws 4 towards one another. The jaws 4 remain in that position and in order to free them for opposite movement, the handle 21 has to be pulled (see Fig. 9). As a result of the said actuation of handle 21, piston 23 moves outwardly, bore 25 will no longer be in communication with conduit 30, as seen in Fig. 9.  However passage 31 which leads from the upper part of cylinder 6 into the cylinder 20 is laid open, so that pressurized air can enter from cross bore 75 and move piston 5 down, causing wedge 9 to move the two jaws from one another.  To enable the piston 5 to move up or down, the air cushion present at the face of piston 5 which is opposite the direction of movement can escape via a ring shaped groove 26 of the piston 23 which is in communication with bore 65 via a passage 33.  Bore 65 leads into the open.  In the same way air can escape - when piston 5 moves in the opposite direction - through passage 31, bore 75.

So far we have described the finction of jaws when gripping a workpiece at its outside.  When the workpiece offers a bore, cavity or recess and it is intended to hold it by means of the latter, an example is shown in Figs. 10-11.  The workpiece W has a recess R and jaws 4 having outjutting ribs 4a engage the workpiece by the said portions 4a entering the recess R.  To this end the feed of pressurized air is led to the inlet of bore 60, passage 33, groove 26, passage 31 to arrive at the top of piston 5 exerting pressure on its top and moving it downwardly, which movement spreads the jaws 4 apart, thus holding the workpiece W frictionally.  In this case air at the lower side of the piston escapes through a passage 30, bore 25 and out through 75.

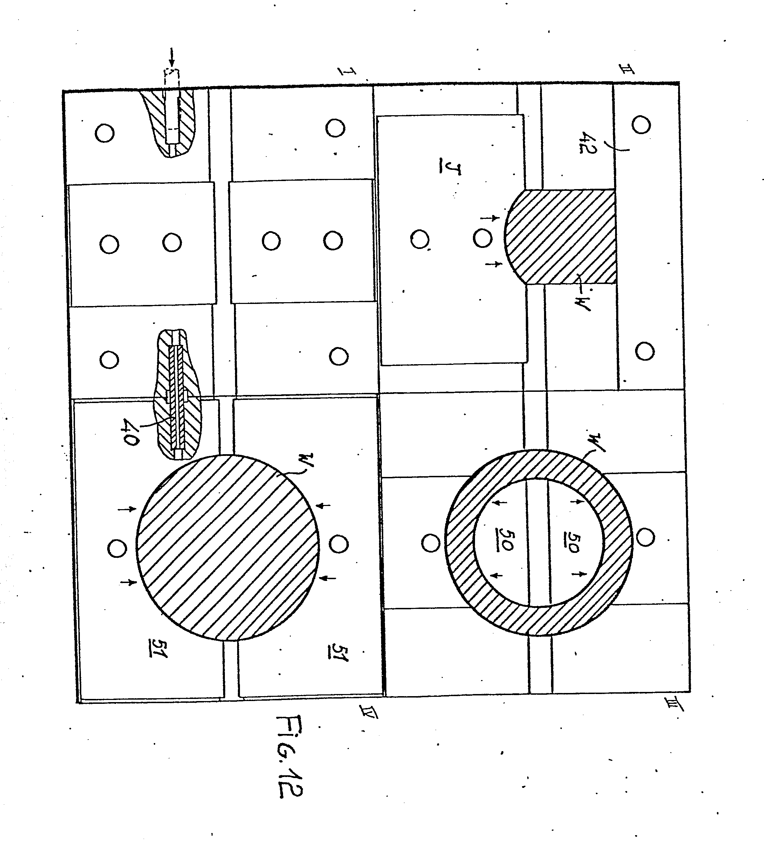

To free the jaws, handle 21 is pulled (see Fig. 11) so that pressure entering bore 60 can pass through passage, restriction 26 , conduit 30 to the space underneath the piston and raise it.

Turning now to Fig. 12, there is shown an arrangement of four chucking fixtures, placed side by side on the same table and being interconnected by short tubes 40 on which O-rings are slipped (through which pressure media can be fed from inlets into 60, 65 or 70, 75).

The arrangement indicated by numeral 1 shows a chucking fixture having a movable jaw J cooperating with a fixed abutment 42 onto which a workpiece W can be pressed.

According to the embodiment III there is a circular workpiece W to be "interiorily" held by two half round convex jaws 60. Finally embodiment IV illustrates a round workpiece W clamped between two concave jaws 51.

In those cases where only one or two of the chucking fixtures is to be used, the other ones may be removed and the respective connection 40 plugged.

As seen in Figs. 5, 6, 7 each of the chucking fixtures has cut-out recesses 15 at its four corners within which holes 16 are provided through which bolts may be passed to affix the whole device to the table of the milling machine. Alternatively, conventional clamps may be used and appropriately placed in recesses 15.

It would be within the scope of the invention to provide a system comprising several of the chucking fixtures described and control the operation of the system by a single, common inlet of pressurized fluid and provide a single, common outlet therefor. That might become necessary in the case of large workpieces - possibly irregular ones.   In that case the system of chucking fixtures comprises a number of closely juxtaposed vises which are connected in succession to the source of pressure fluid.

CLAIMS:

1. A chucking fixture for use in holding workpieces on the table of a milling machine or like machine tools, such fixture comprising a body and seated in the said body a pair of jaws at least one of which is movable, those faces of the said jaw bodies which are directed towards one another extending in oppositely inclined planes, a wedge shaped body being provided movably attached at its inclined faces to the inclined faces of the said jaws, means being provided for moving the said wedge shaped body in a direction normal to the axis of the jaws which is common to both of them.

2. The chucking fixture claimed in claim 1 characterised thereby that the body of the fixture has plane side faces.

3. The chucking fixture claimed in claim 1 characterised thereby that on the inclined faces of the jaws extend T-profiled ribs adapted to engage in a correspondingly shaped groove in the inclined faces of the said wedge shaped body.

4. The chucking fixture claimed in claim 1 characterised thereby that the inclination at the oblique sides of the jaws is at an angle of 6-8% to the vertical.

5. The chucking fixture claimed in all or any of the foregoing claims characterised thereby that the jaws are of "soft" metal.

6. The chucking fixture claimed in all or any of the preceding claims, characterised thereby that the means for moving the said wedge shaped body is constituted by a pneumatic or hydraulic cylinder positioned at the thin end of the wedge shaped body so that the fluid on which the piston of that cylinder acts can - in turn - act on the face of the wedge shaped body which is directed towards the said piston.

- 12 -

0069359

7.   The fixture claimed in claim 4 characterised thereby that conduits are provided in the body of the fixture for feeding activating fluid to the said pneumatic or hydraulic cylinder, such conduits being provided at their outward ends with means for connection to a source of pressurized fluid.

8.   The fixture claimed in claim 5 characterised thereby that the said fluid conduits are provided with tubular means for the interconnection of fluid conduits of vicinally placed fixture bodies.

9.   The fixture claimed in claims 4, 5, or 6 characterised by valve means interposed between the pneumatic or hydraulic cylinder and a fluid feeding conduit in the body of the fixture.

10.   The fixture claimed in claim 7 characterised thereby that the said valve means are constituted by a blind bore in the body of the fixture forming a cylinder, a piston being movable in the said cylinder, such cylinder having an axially extending bore and a radial outlet therefrom which can be brought into and out of communication with the cylinder. controlling the movement of the wedge shaped body.

11.   The fixture claimed in claim 10, characterised thereby that the said valve  means are releasable by outward movement of the piston.

12.   A set of fixtures for simultaneous use, as claimed in all or any of the foregoing claims characterised thereby that individual fixtures are interconnected by tubes passing from one fixture body into a vicinal one.

13. A chucking fixture, substantially as hereinbefore described and as shown in the accompanying drawings.

14. As a modular chucking fixture system, a multiple number of chucking fixtures claimed in claim 1 or any of the preceding claims, characterised by the provision of a common inlet and a common outlet of pressurized fluid.

FiG. 1

FiG.2

0069359

FIG.3

FIG. 4

FIG. 6

FIG. 5

FIG. 7

FIG. 9

FIG. 8

FIG. 10

FIG. 11

Fig.12

0069359

European Patent Office

**EUROPEAN SEARCH REPORT**

Application number

EP 82 10 5903.7

## DOCUMENTS CONSIDERED TO BE RELEVANT

| Category | Citation of document with indication, where appropriate, of relevant passages | Relevant to claim |
|---|---|---|
| X | US - A - 3 899 162 (H.J. FISCHER)<br>* column 1, lines 6 to 40; column 2, line 23 to column 3, line 26; fig. 1 to 8 *<br>-- | 1,2,5 |
| A | US - A - 2 704 214 (P.F. BEAUSOLEIL)<br>* columns 1, 2; fig. 1 to 3 *<br>-- | 1,3,6 |
| A | DE - A1 - 2 759 183 (SERVOTRON-TABERT KG)<br>* page 8, line 24 to page 9, line 16; fig. 1 to 3 *<br>-- | 2,7,8,<br>12,14 |
| A | GB - A - 1 294 287 (APPLIED POWER INDUSTRIES, INC)<br>* claims 17, 18; fig. 1 to 5 *<br>-- | 7,8,14 |
| A | DE - U - 7 146 354 (W. ENDER)<br>---- | |

**CLASSIFICATION OF THE APPLICATION (Int. Cl. 3)**

B 23 Q    3/08

**TECHNICAL FIELDS SEARCHED (Int.Cl. 3)**

B 23 B    31/30

B 23 Q    3/00

B 25 B    1/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | The present search report has been drawn up for all claims | |
|---|---|---|

X

| Place of search | Date of completion of the search | Examiner |
|---|---|---|
| Berlin | 16-09-1982 | MARTIN |

EPO Form 1503.1  06.78